# EUROPÄISCHE PATENTANMELDUNG

(11) **EP 4 843 702 A1**
(43) Veröffentlichungstag der Anmeldung: **25.11.2026**
(21) Anmeldenummer: 25178350.2
(22) Anmeldetag: 22.05.2025
(51) Int. Cl.: B23Q 1/03, B27C 5/06

(54) **WERKSTÜCKAUFSPANNVORRICHTUNG UND HOLZBEARBEITUNGSMASCHINE MIT EINER WERKSTÜCKAUFSPANNVORRICHTUNG**

(71) Anmelder: HOLZ-HER GmbH, 72622 Nürtingen (DE)
(72) Erfinder: Schumacher, Julian, 73235 Weilheim/Teck (DE); Stolz, Jochen, 72574 Bad Urach (DE); Lorber, Denis, 72663 Grossbettlingen (DE); May, Florian, 86157 Augsburg (DE)
(74) Vertreter: Hoeger, Stellrecht & Partner Patentanwälte mbB

(57) **Zusammenfassung**

Die Erfindung betrifft eine Werkstückaufspannvorrichtung (16) zum Aufspannen von zu bearbeitenden Werkstücken für eine Holzbearbeitungsmaschine (10), mit mindestens zwei Führungsschienen (20, 22) und mehreren Konsolen (24, 26, 28, 30, 32, 34), die entlang der Führungsschienen (20, 22) bewegbar sind und auf deren Oberseite (35) jeweils mehrere Spannelemente (36, 38, 40) aufsetzbar sind, die jeweils ein Auflager für das aufzuspannende Werkstück aufweisen. Zumindest einer Konsole (24, 26, 28, 30, 32, 34) ist eine Bewegungseinrichtung (42) zugeordnet mit einer innerhalb der Konsole (24, 26, 28, 30, 32, 34) angeordneten und in Längsrichtung der Konsole (24, 26, 28, 30, 32, 34) verfahrbaren Mitnahmevorrichtung (44) zum Bewegen der auf die Konsole aufgesetzten Spannelemente (36, 38, 40) entlang der Konsole, wobei die Mitnahmevorrichtung (44) zum Bewegen eines aufgesetzten Spannelements (36, 38, 40) mit diesem koppelbar und nach erfolgter Bewegung des Spannelements (36, 38, 40) von diesem entkoppelbar ist. Um die Werkstückaufspannvorrichtung (16) derart weiterzubilden, dass sie einen verhältnismäßig geringen Herstellungsaufwand erfordert und die Gefahr einer Beeinträchtigung durch Schmutzpartikel geringgehalten werden kann, wird vorgeschlagen, dass die Mitnahmevorrichtung (44) mit dem jeweils zu bewegenden Spannelement (36, 38, 40) berührungslos koppelbar ist.

## Beschreibung

Die Erfindung betrifft eine Werkstückaufspannvorrichtung zum Aufspannen von zu bearbeitenden Werkstücken für eine Holzbearbeitungsmaschine, mit mindestens zwei Führungsschienen und mehreren Konsolen, die entlang der Führungsschienen bewegbar sind und auf deren Oberseite jeweils mehrere Spannelemente aufsetzbar sind, die jeweils ein Auflager für das aufzuspannende Werkstück aufweisen, wobei zumindest einer Konsole eine Bewegungseinrichtung zugeordnet ist mit einer innerhalb der Konsole angeordneten und in Längsrichtung der Konsole verfahrbaren Mitnahmevorrichtung zum Bewegen der auf die Konsole aufgesetzten Spannelemente entlang der Konsole, wobei die Mitnahmevorrichtung zum Bewegen eines aufgesetzten Spannelements mit diesem koppelbar und nach erfolgter Bewegung des Spannelements von diesem entkoppelbar ist.

Außerdem betrifft die Erfindung eine Holzbearbeitungsmaschine zum Bearbeiten von plattenförmigen Werkstücken aus Holz und Holzersatzstoffen, umfassend ein Maschinengestell und eine entlang des Maschinengestells hin und her verfahrbare Bearbeitungsvorrichtung zum Bearbeiten der Werkstücke, und weiter umfassend eine Steuereinrichtung sowie eine Werkstückaufspannvorrichtung der voranstehend genannten Art.

Zum Bearbeiten von plattenförmigen Werkstücken aus Holz und Holzersatzstoffen, beispielsweise Spanplatten, sind Holzbearbeitungsmaschinen bekannt mit einem Maschinengestell und einer entlang des Maschinengestells hin und her verfahrbaren Bearbeitungsvorrichtung zum Bearbeiten der Werkstücke. Die Bearbeitungsvorrichtung kann beispielsweise Bohr- und/oder Fräsaggregate umfassen. Zur Steuerung der Bearbeitungsvorrichtung weisen die Holzbearbeitungsmaschinen eine Steuereinrichtung auf, und zum Aufspannen der zu bearbeitenden Werkstücke weisen die Holzbearbeitungsmaschinen eine Werkstückaufspannvorrichtung auf.

Die Werkstückaufspannvorrichtung weist mindestens zwei Führungsschienen auf sowie mehrere Konsolen, die entlang der Führungsschienen verschiebbar sind. Außerdem weist die Werkstückaufspannvorrichtung mehrere Spannelemente auf, die auf die Oberseite der Konsolen aufsetzbar und entlang der Konsolen bewegbar sind. Die Spannelemente bilden jeweils ein Auflager für das aufzuspannende Werkstück aus.

Um zu vermeiden, dass die Spannelemente während der Bearbeitung eines Werkstücks von der Bearbeitungsvorrichtung beschädigt werden, müssen die Konsolen und die Spannelemente während der Bearbeitung eines Werkstücks vorgegebene Positionen einnehmen. Die Positionierung der Konsolen an den Führungsschienen und die Positionierung der Spannelemente an den Konsolen erfolgt häufig manuell. Dies erfordert allerdings eine beachtliche Umrüstzeit, wenn Werkstücke mit unterschiedlichen Konturen bearbeitet werden sollen.

Aus der DE 100 23 916 A1 ist eine Werkstückaufspannvorrichtung bekannt, die zum Bewegen der Spannelemente eine mittels einer Steuereinrichtung steuerbare Bewegungseinrichtung aufweist, mit deren Hilfe die Spannmittel in vorgegebene Positionen verfahrbar sind. Die Bewegungseinrichtung weist mehrere Aufnahmeplatten auf, die längs der Konsole verschoben werden können und auf die wiederum jeweils ein Spannelement aufgesetzt werden kann. Die Aufnahmeplatten weisen eine Unterkonstruktion auf, die in eine oberseitige Öffnung der Konsole eintaucht und mit einer in der Konsole angeordneten Mitnahmevorrichtung in Form eines Riemens, der motorisch in Längsrichtung der Konsole bewegt werden kann, gekoppelt werden kann. Die jeweils auf eine Aufnahmeplatte aufgesetzten Spannelemente können mithilfe der Mitnahmevorrichtung nacheinander in eine gewünschte Position verfahren werden. Hat ein Spannelement seine vorgegebene Position erreicht, kann die Aufnahmeplatte, auf der das Spannelement aufsitzt, von der Mitnahmevorrichtung in Form des Riemens entkoppelt werden. Eine derartige Ausgestaltung einer Werkstückaufspannvorrichtung ermöglicht es zwar, mehrere Spannmittel innerhalb relativ kurzer Zeit in vorgegebene Positionen zu bewegen, sodass die Umrüstung der Werkstückaufspannvorrichtung innerhalb verhältnismäßig kurzer Zeit erfolgen kann, die Werkstückaufspannvorrichtung zeichnet sich aber durch einen erheblichen Herstellungsaufwand aus und ist störungsanfällig gegen Schmutzpartikel, insbesondere Sägespäne, die während der Bearbeitung eines Werkstücks entstehen.

Aus der DE 44 44 339 C1 ist eine Holzbearbeitungsmaschine bekannt, bei der die Spannmittel mithilfe einer zentralen Bewegungseinrichtung in Längsrichtung der Konsolen verschoben werden können. Die Bewegungseinrichtung kann in Form einer Mitnahmevorrichtung ausgestaltet sein, die an einem Ausleger für einen Bearbeitungskopf der Holzbearbeitungsmaschine angeordnet ist. Alternativ kann für die zentrale Mitnahmevorrichtung ein zusätzliches Rüstportal zum Einsatz kommen. Eine derartige Ausgestaltung ist ebenfalls mit einem erheblichen Herstellungsaufwand verbunden.

In der DE 195 38 830 A1 wird eine Holzbearbeitungsmaschine offenbart, bei der auf den Konsolen Spannelemente angeordnet sind, die jeweils einen eigenen Antrieb aufweisen, der zusammen mit dem jeweiligen Spannelement verfahren wird. Der Einsatz der Vielzahl von jeweils einem Spannelement zugeordneten Antrieben hat ebenfalls einen erheblichen Herstellungsaufwand zur Folge.

Aufgabe der vorliegenden Erfindung ist es daher, eine Werkstückaufspannvorrichtung der gattungsgemäßen Art derart weiterzubilden, dass sie einen verhältnismäßig geringen Herstellungsaufwand erfordert und die Gefahr einer Beeinträchtigung durch Schmutzpartikel geringgehalten werden kann.

Diese Aufgabe wird bei einer Werkstückaufspannvorrichtung der eingangs genannten Art erfindungsgemäß dadurch gelöst, dass die Mitnahmevorrichtung mit dem jeweils zu bewegenden Spannelement berührungslos koppelbar ist.

Bei der erfindungsgemäßen Werkstückaufspannvorrichtung können die auf die Oberseite einer Konsole aufgesetzten Spannelemente nacheinander mit der innerhalb der Konsole angeordneten Mitnahmevorrichtung gekoppelt werden, wobei die Kopplung berührungslos erfolgt. Zusammen mit der längs der Konsole verfahrbaren Mitnahmevorrichtung kann dann das mit der Mitnahmevorrichtung gekoppelte Spannelement in eine vorgegebene Position bewegt werden. Anschließend kann die Mitnahmevorrichtung von dem positionierten Spannelement entkoppelt werden. Die Mitnahmevorrichtung kann dann zu einem weiteren Spannelement verfahren und zum Bewegen des weiteren Spannelements mit diesem gekoppelt werden. Die Positionsvorgabe kann mittels einer Steuereinrichtung erfolgen, die die Bewegungseinrichtung und damit auch die Mitnahmevorrichtung steuert. Die berührungslose Kopplung der Mitnahmevorrichtung mit dem jeweils zu bewegenden Spannelement hat den Vorteil, dass die Oberseite der Konsole keine Öffnungen aufweisen muss, in die mechanische Kopplungsmittel eintauchen und die ein Risiko darstellen für eine Beeinträchtigung der Werkstückaufspannvorrichtung durch Schmutzpartikel. Darüber hinaus zeichnet sich die erfindungsgemäße Werkstückaufspannvorrichtung durch einen verhältnismäßig geringen Herstellungsaufwand aus.

Von besonderem Vorteil ist es, wenn die Mitnahmevorrichtung mit dem jeweils zu bewegenden Spannelement magnetisch koppelbar ist, wobei die Mitnahmevorrichtung und die Spannelemente jeweils mindestens ein magnetisches oder magnetisierbares Kopplungsglied aufweisen. Beispielsweise kann vorgesehen sein, dass die Mitnahmevorrichtung zumindest ein magnetisches Kopplungsglied aufweist, das ein Magnetfeld bereitstellt, welches zur Kopplung der Mitnahmevorrichtung mit einem zu bewegenden Spannelement in Wechselwirkung tritt mit mindestens einem magnetisierbaren Kopplungsglied des zu bewegenden Spannelements. Als magnetisierbares Kopplungsglied kann insbesondere ein ferromagnetisches Material zum Einsatz kommen. Beispielsweise kann vorgesehen sein, dass das Spannelement mindestens ein aus einem Eisenmaterial gefertigtes Kopplungsglied aufweist, insbesondere eine Eisenplatte.

Alternativ kann vorgesehen sein, dass sowohl die Mitnahmevorrichtung als auch die Spannelemente jeweils ein magnetisches Kopplungsglied aufweisen, das ein Magnetfeld bereitstellt. Es kann auch vorgesehen sein, dass die Mitnahmevorrichtung ein magnetisierbares Kopplungsglied, beispielsweise ein ferromagnetisches Kopplungsglied, aufweist, und dass die Spannelemente jeweils mindestens ein magnetisches Kopplungsglied aufweisen.

Von besonderem Vorteil ist es, wenn das mindestens eine Kopplungsglied der Mitnahmevorrichtung und/oder das mindestens eine Kopplungsglied der Spannelemente als Permanentmagnet ausgestaltet ist. Zur Erzielung einer besonders hohen Magnetkraft ist es von Vorteil, wenn sowohl die Spannelemente als auch die Mitnahmevorrichtung jeweils mindestens einen Permanentmagnet aufweisen.

Günstig ist es, wenn das Kopplungsglied der Mitnahmevorrichtung zwischen einer Kopplungsstellung und einer Entkopplungsstellung hin und her bewegbar ist. In der Kopplungsstellung weist das mindestens eine Kopplungsglied der Mitnahmevorrichtung einen geringeren Abstand zu dem mindestens einen Kopplungsglied des Spannelements auf als in der Entkopplungsstellung. Der verhältnismäßig geringe Abstand, den das mindestens eine Kopplungslied der Mitnahmevorrichtung in der Kopplungsstellung zu dem mindestens einen Kopplungsglied des Spannelements einnimmt, ermöglicht eine sehr starke Wechselwirkung zwischen den Kopplungsgliedern. Um die Wechselwirkung möglichst nicht durch das Material der Konsole zu beeinträchtigen, ist die Konsole bevorzugt aus einem Aluminiummaterial gefertigt. Nimmt das mindestens eine Kopplungsglied der Mitnahmevorrichtung seine Entkopplungsstellung ein, so liegt allenfalls eine verhältnismäßig geringe Wechselwirkung mit dem mindestens einen Kopplungsglied des Spannelements vor. Die geringe Wechselwirkung hat zur Folge, dass die Mitnahmevorrichtung innerhalb der Konsole in Längsrichtung verfahren werden kann, ohne dass eine Bewegung der auf der Oberseite der Konsole angeordneten Spannelemente erfolgt, da die Mitnahmevorrichtung aufgrund der geringen Wechselwirkung keine ausreichende Zugkraft auf ein Spannelement ausüben kann. Zur Kopplung der Mitnahmevorrichtung mit einem auf der Oberseite der Konsole angeordneten Spannelement kann die Mitnahmevorrichtung in eine Position unmittelbar unterhalb des Spannelements verfahren werden, und anschließend kann das mindestens eine Kopplungsglied der Mitnahmevorrichtung aus der Entkopplungsstellung in die Kopplungsstellung bewegt werden, sodass eine starke Wechselwirkung mit dem mindestens einen Kopplungsglied des oberhalb der Mitnahmevorrichtung auf der Oberseite der Konsole angeordneten Spannelements auftritt und dadurch das Spannelement beim Verfahren der Mitnahmevorrichtung entlang der Konsole bewegt werden kann. Hat die Mitnahmevorrichtung zusammen mit dem mit dieser gekoppelten Spannelement eine vorgegebene Position erreicht, so kann das mindestens eine Kopplungsglied der Mitnahmevorrichtung wieder seine Entkopplungsstellung einnehmen, sodass die Mitnahmevorrichtung anschließend unabhängig vom Spannelement verfahren werden kann.

Bei einer besonders bevorzugten Ausgestaltung der Erfindung weist die Mitnahmevorrichtung einen innerhalb der Konsole in deren Längsrichtung verfahrbaren Schlitten auf, der mit einem Antriebsaggregat verbunden ist und an dem das mindestens eine Kopplungsglied der Mitnahmevorrichtung zwischen der Kopplungsstellung und der Entkopplungsstellung hin und her bewegbar gehalten ist. Der Schlitten kann mittels des Antriebsaggregats innerhalb der Konsole in eine gewünschte Position verfahren werden, wobei das mindestens eine Kopplungsglied der Mitnahmevorrichtung zunächst seine Entkopplungsstellung einnehmen kann. Erreicht der Schlitten eine vorgegebene Position unterhalb eines Spannelements, dann kann das mindestens eine Kopplungsglied in seine Kopplungsstellung bewegt werden, in der es mit dem oberhalb des Schlittens angeordneten Spannelement in Wechselwirkung tritt, sodass das Spannelement anschließend zusammen mit dem Schlitten verfahren werden kann.

Der Schlitten ist bei einer konstruktiv besonders einfachen Ausgestaltung der Erfindung über einen Linearantrieb, insbesondere einen Spindelantrieb mit dem Antriebsaggregat verbunden. Der Spindelantrieb kann eine innerhalb der Konsole angeordnete Gewindespindel und eine mit dieser zusammenwirkende Spindelmutter aufweisen. Die Gewindespindel kann vom Antriebsaggregat in Drehung versetzt werden, sodass die Spindelmutter in Längsrichtung der Gewindespindel bewegt werden kann. Die Spindelmutter ist am Schlitten festgelegt, sodass dieser zusammen mit der Spindelmutter in Längsrichtung der Konsole verfahren werden kann.

Das Antriebsaggregat für den Schlitten ist bevorzugt als Elektromotor, insbesondere als Servomotor, ausgestaltet. Der Elektromotor kann von der voranstehend bereits erläuterten Steuereinrichtung gesteuert werden und kann einen Weggeber, insbesondere einen Drehgeber, aufweisen, mit dessen Hilfe die Position des Schlittens bestimmt werden kann. Der Weggeber, insbesondere der Drehgeber, kann der Steuereinrichtung ein Gebersignal bereitstellen, sodass die Steuereinrichtung die aktuelle Position des Schlittens ermitteln kann.

Das Antriebsaggregat ist bevorzugt unterhalb eines Endabschnitts der Konsole angeordnet.

Der Schlitten ist günstigerweise in der Konsole drehfest und in Längsrichtung der Konsole beweglich gehalten. Die Konsole kann innenseitig eine Führung ausbilden, beispielsweise in Form einer Nut oder in Form eines Führungsprofils, entlang derer der Schlitten verfahren werden kann, wobei durch die Führung eine drehfeste Verbindung des Schlittens mit der Konsole sichergestellt ist.

Günstig ist es, wenn die Mitnahmevorrichtung eine Schwenkeinheit aufweist, die am Schlitten um eine in Längsrichtung der Konsole ausgerichtete Schwenkachse verschwenkbar gelagert ist und an der das mindestens eine Kopplungsglied der Mitnahmevorrichtung festgelegt ist. Durch Verschwenken der Schwenkeinheit kann das mindestens eine Kopplungsglied der Mitnahmevorrichtung zwischen einer Kopplungsstellung und einer Entkopplungsstellung hin und her bewegt werden.

Die Schwenkeinheit ist günstigerweise über eine Schwenkmechanik mit einem Schwenkaggregat verbunden.

Die Schwenkmechanik kann beispielsweise ein längliches Schwenkorgan aufweisen, das sich innerhalb der Konsole über dessen gesamte Länge erstreckt und mittels des Schwenkaggregats um die in Längsrichtung der Konsole ausgerichtete Schwenkachse verschwenkbar ist. Die Schwenkeinheit kann am Schwenkorgan in dessen Längsrichtung beweglich gehalten sein, sodass die Schwenkeinheit zusammen mit dem Schlitten in Längsrichtung der Konsole verfahren werden kann und die Schwenkeinheit relativ zum Schlitten mittels des Schwenkorgans und des Schwenkaggregats um die Schwenkachse verschwenkt werden kann.

Zur Kopplung der Mitnahmevorrichtung mit einem auf der Oberseite der Konsole angeordneten Spannelement kann der Schlitten mittels des Antriebsaggregats in eine Position unterhalb des Spannelements verfahren werden, wobei die Schwenkeinheit zunächst eine Stellung einnimmt, in der das mindestens eine Kopplungsglied der Mitnahmevorrichtung eine Entkopplungsstellung einnimmt. Hat der Schlitten seine Position unterhalb des zu bewegenden Spannelements eingenommen, dann kann die Schwenkeinheit mittels des Schwenkaggregats um die in Längsrichtung der Konsole ausgerichtete Schwenkachse verschwenkt werden, sodass das mindestens eine Kopplungsglied der Mitnahmevorrichtung seine Kopplungsstellung einnimmt und dadurch mit dem mindestens einen Kopplungsglied des Spannelements in eine starke Wechselwirkung tritt. Anschließend kann dann das Spannelement zusammen mit dem Schlitten mittels des Antriebsaggregats in Längsrichtung der Konsole bewegt werden, wobei die Schwenkeinheit ihre zuvor eingenommene Schwenkstellung beibehält. Zur Entkopplung der Mitnahmevorrichtung von dem Spannelement kann dann die Schwenkmechanik derart verschwenkt werden, dass das mindestens eine Kopplungsglied der Mitnahmevorrichtung seine Entkopplungsstellung einnimmt und dadurch praktisch keine Wechselwirkung mehr auftritt mit dem mindestens einen Kopplungsglied des Spannelements.

Das Schwenkaggregat kann beispielsweise als Elektromotor ausgestaltet sein oder auch als hydraulisches oder pneumatisches Kolben-Zylinderaggregat.

Von Vorteil ist es, wenn das Schwenkaggregat an einer Stirnseite der Konsole angeordnet ist.

Bei einer besonders bevorzugten Ausgestaltung der Erfindung weisen die Spannelemente der Werkstückaufspannvorrichtung jeweils ein Fahrwerk auf, an dem mehrere Stützelemente, insbesondere Laufrollen oder Laufräder, drehbar gelagert sind, wobei das Fahrwerk mittels der Mitnahmevorrichtung aus einer Ruhestellung in Richtung auf die Oberseite der Konsole in eine Arbeitsstellung bewegbar ist. Bei einer derartigen Ausgestaltung der Erfindung kann ein auf der Oberseite der Konsole angeordnetes Spannelement mit sehr geringem Reibungswiderstand entlang der Oberseite der Konsole bewegt werden, indem das Fahrwerk des Spannelements mithilfe der Mitnahmevorrichtung in eine Arbeitsstellung bewegt wird. In der Arbeitsstellung des Fahrwerks stützt sich das Spannelement lediglich über die Stützelemente an der Oberseite der Konsole ab. Die Stützelemente, beispielsweise in Form von Laufrollen oder Laufräder, können bei einer Bewegung des Spannelements an der Oberseite abrollen, sodass der Reibungswiderstand sehr geringgehalten werden kann. Die Kopplung der Mitnahmevorrichtung mit einem zu bewegenden Spannelement hat bei einer derartigen Ausgestaltung der Erfindung nicht nur zur Folge, dass das Spannelement mittels der Mitnahmevorrichtung bewegt werden kann, sondern die Kopplung hat gleichzeitig zur Folge, dass das Fahrwerk des Spannelements zusammen mit den an diesem drehbar gelagerten Stützelementen aus einer Ruhstellung in eine Arbeitsstellung bewegt wird, in der sich das Spannelement lediglich über die drehbar gelagerten Stützelemente an der Oberseite der Konsole abstützt.

Wie eingangs erwähnt, betrifft die Erfindung auch eine Holzbearbeitungsmaschine mit einer Werkstückaufspannvorrichtung der voranstehend erläuterten Art. Die Holzbearbeitungsmaschine ist eingerichtet zum Bearbeiten von plattenförmigen Werkstücken aus Holz und Holzersatzstoffen und weist ein Maschinengestell auf sowie eine entlang des Maschinengestells hin und her verfahrbare Bearbeitungsvorrichtung zum Bearbeiten der Werkstücke. Außerdem weist die Holzbearbeitungsmaschine eine Steuereinrichtung auf sowie eine Werkstückaufspannvorrichtung der voranstehend erläuterten Art, wobei die Führungsschienen der Werkstückaufspannvorrichtung am Maschinengestell festgelegt sind.

Es kann beispielsweise vorgesehen sein, dass die Holzbearbeitungsmaschine ein CNC-Holzbearbeitungszentrum ausbildet.

Die nachfolgende Beschreibung einer vorteilhaften Ausführungsform der Erfindung dient im Zusammenhang mit der Zeichnung der näheren Erläuterung. Es zeigen:
- Figur 1:: eine perspektivische Darstellung einer Holzbearbeitungsmaschine mit einer Werkstückaufspannvorrichtung zum Aufspannen von zu bearbeitenden Werkstücken;
- Figur 2:: eine erste perspektivische Darstellung einer Konsole der Werkstückaufspannvorrichtung aus Figur 1, wobei auf der Konsole drei Spannelemente angeordnet sind und stirnseitige Abdeckungen der Konsole ausgeblendet sind;
- Figur 3:: eine zweite perspektivische Darstellung der Konsole aus Figur 2;
- Figur 4:: eine erste perspektivische Darstellung einer Bewegungseinrichtung der Werkstückaufspannvorrichtung aus Figur 1, wobei ein Kopplungsglied einer Mitnahmevorrichtung der Bewegungseinrichtung eine Entkopplungsstellung einnimmt;
- Figur 5:: eine vergrößerte perspektivische Darstellung von Detail A aus Figur 4;
- Figur 6:: eine perspektivische Darstellung entsprechend Figur 5, wobei das Kopplungsglied der Mitnahmevorrichtung eine Kopplungsstellung einnimmt;
- Figur 7:: eine zweite perspektivische Darstellung der Bewegungseinrichtung aus Figur 4, wobei das Kopplungsglied der Mitnahmevorrichtung eine Entkopplungsstellung einnimmt;
- Figur 8:: eine vergrößerte Darstellung von Detail B aus Figur 7;
- Figur 9:: eine vergrößerte Darstellung entsprechend Figur 8, wobei das Kopplungsglied eine Kopplungsstellung einnimmt;
- Figur 10:: eine Schnittansicht der Konsole längs der Linie 10-10 in Figur 2, wobei ein Kopplungsglied der Mitnahmevorrichtung eine Entkopplungsstellung einnimmt;
- Figur 11:: eine Schnittansicht entsprechend Figur 10, wobei das Kopplungsglied eine Kopplungsstellung einnimmt.

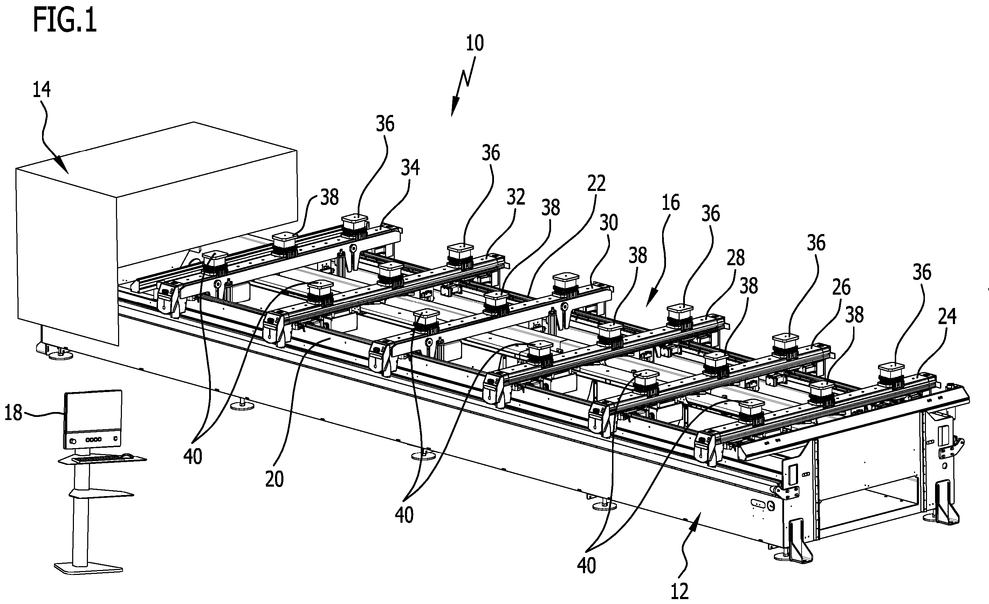

In Figur 1 ist beispielhaft eine vorteilhafte Ausführungsform einer erfindungsgemäßen Holzbearbeitungsmaschine schematisch dargestellt und insgesamt mit dem Bezugszeichen 10 belegt. Die Holzbearbeitungsmaschine 10 ist eingerichtet zum Bearbeiten von plattenförmigen Werkstücken aus Holz und Holzersatzstoffen.

Die Holzbearbeitungsmaschine 10 weist ein Maschinengestell 12 auf und eine Bearbeitungsvorrichtung 14, die entlang des Maschinengestells 12 hin und her verfahrbar ist zum Bearbeiten der Werkstücke. Die Bearbeitungsvorrichtung 14 kann beispielsweise mehrere Bohr- und/oder Fräsaggregate aufweisen. Derartige Bearbeitungsvorrichtungen sind dem Fachmann an sich bekannt und bedürfen daher vorliegend keiner näheren Erläuterung.

Zum Festlegen der zu bearbeitenden Werkstücke am Maschinengestell 12 weist die Holzbearbeitungsmaschine 10 eine vorteilhafte Ausführungsform einer erfindungsgemäßen Werkstückaufspannvorrichtung 16 auf, die nachfolgend näher erläutert wird. Darüber hinaus weist die Holzbearbeitungsmaschine 10 eine Steuereinrichtung 18 auf.

Die Werkstückaufspannvorrichtung 16 weist zwei parallel zueinander ausgerichtete und an der Oberseite des Maschinengestells 12 festgelegte Führungsschienen 20, 22 auf. Die Führungsschienen 20, 22 können beispielsweise in Form von Mehrkantprofilen ausgestaltet sein.

Die beiden Führungsschienen 20, 22 tragen mehrere identisch ausgestaltete Konsolen 24, 26, 28, 30, 32, 34, die senkrecht zu den Führungsschienen 20, 22 ausgerichtet und längs der Führungsschienen 20, 22 verschiebbar sind. Auf ihrer Oberseite 35 tragen die Konsolen 24, 26, 28, 30, 32, 34 jeweils mehrere Spannelemente.

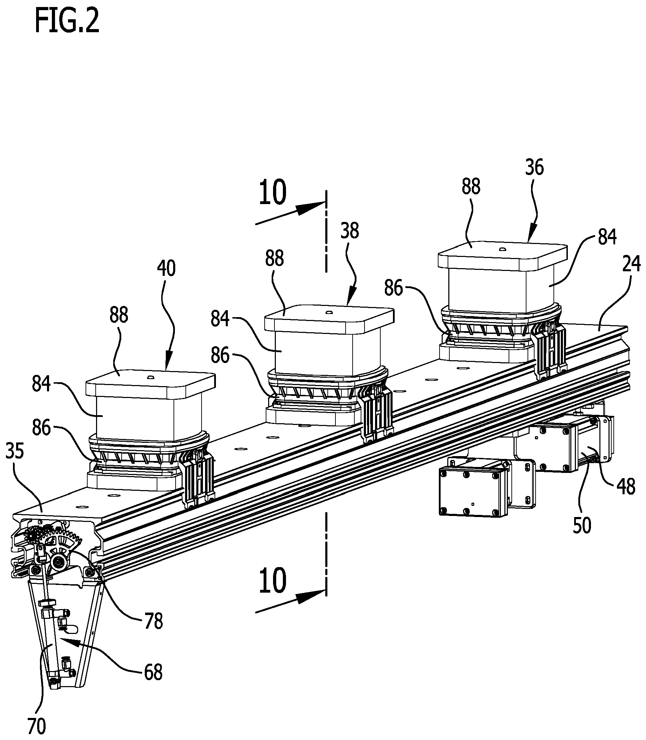

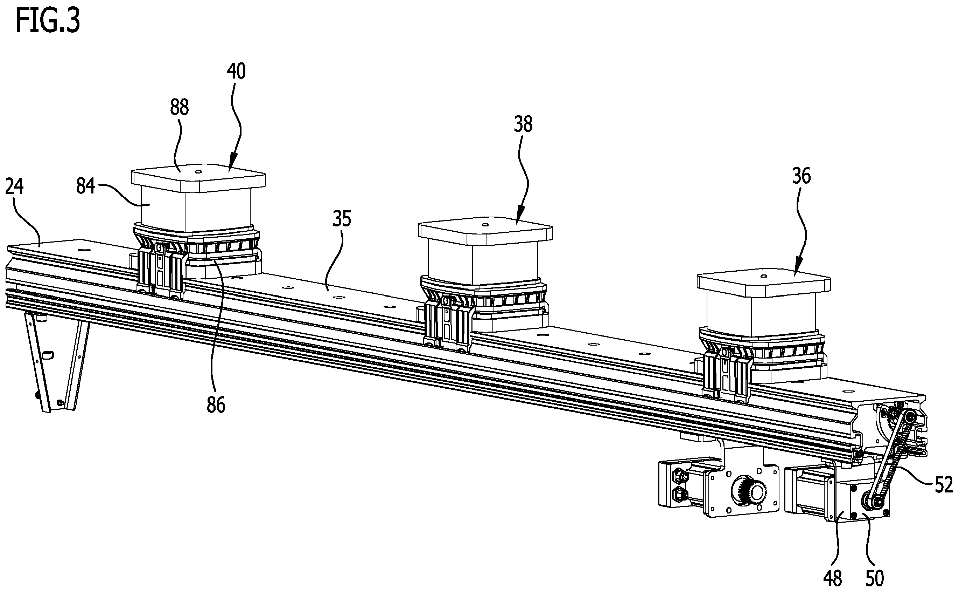

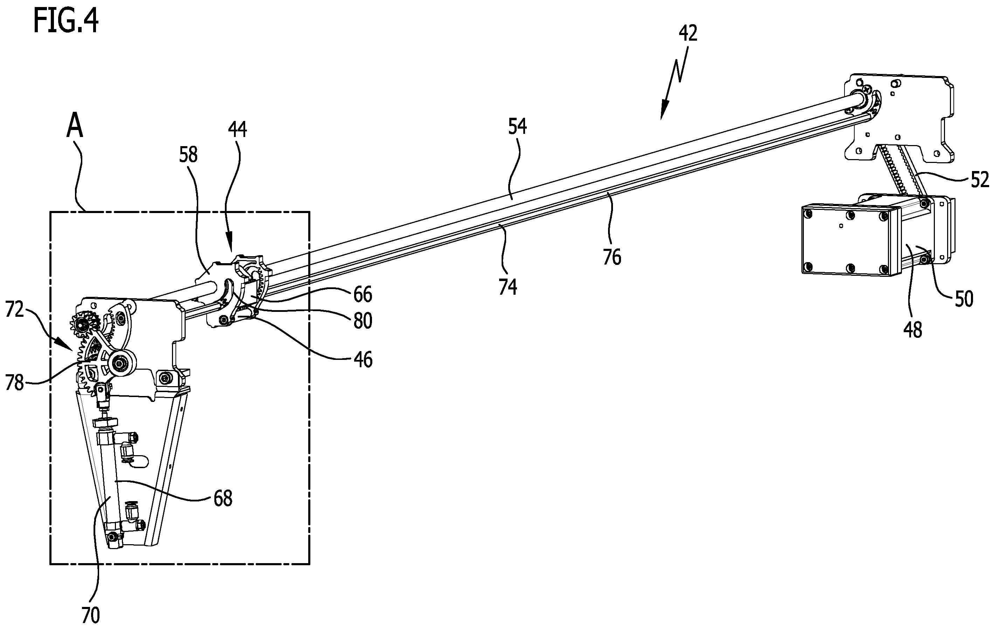

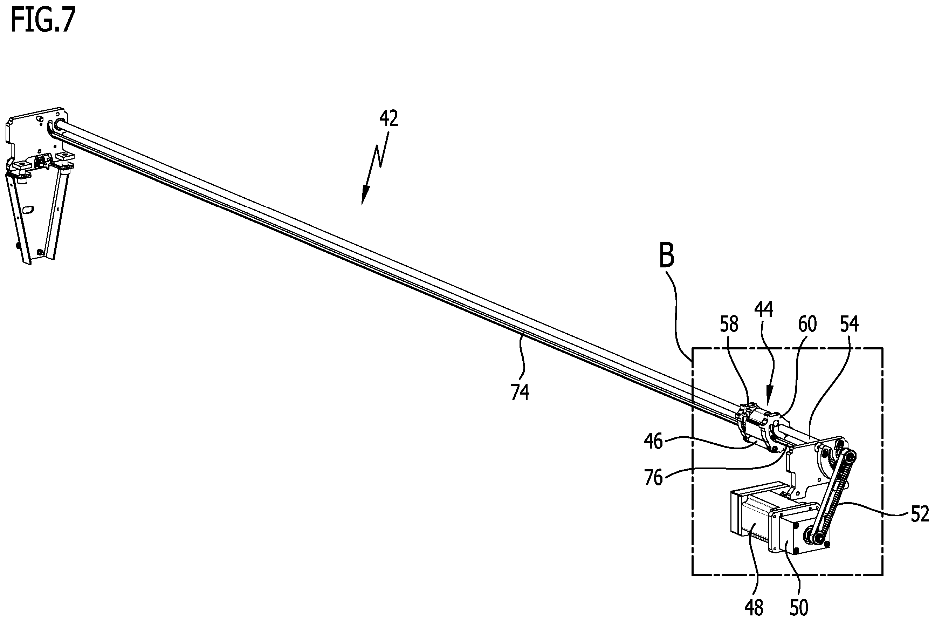

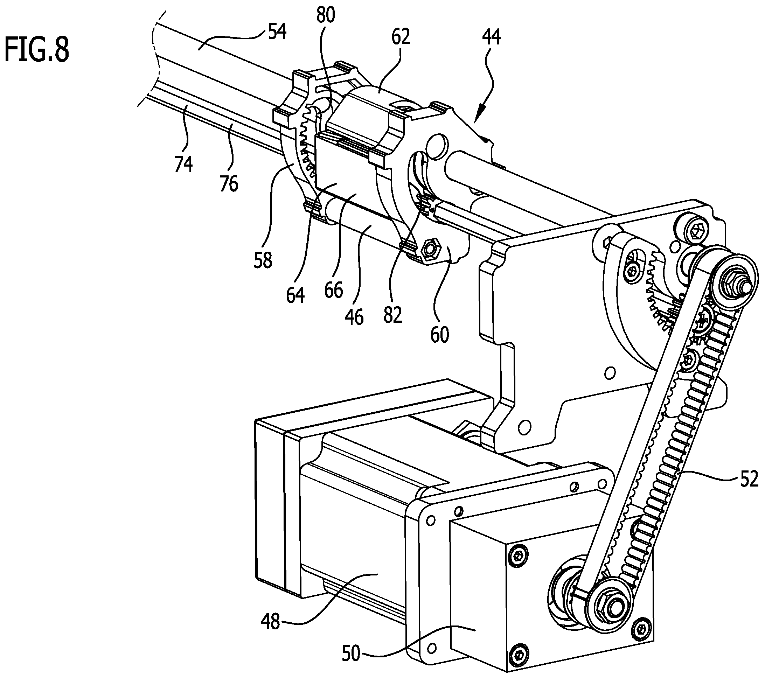

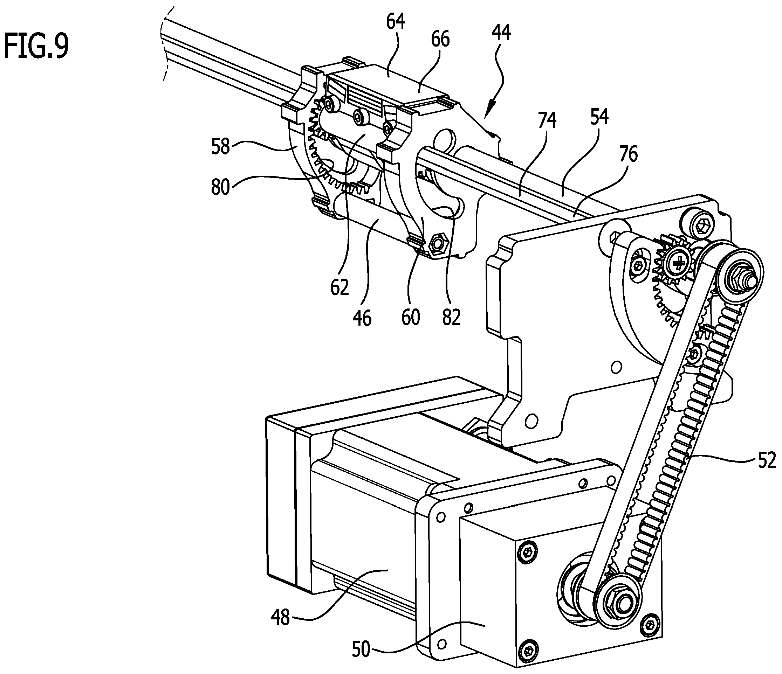

Zur Erzielung einer besseren Übersicht ist in den Figuren 2 und 3 beispielhaft eine erste Konsole 24 dargestellt, die auf ihrer Oberseite 35 ein erstes Spannelement 36, ein zweites Spannelement 38 und ein drittes Spannelement 40 trägt. Mittels einer in den Figuren 4 bis 9 dargestellten Bewegungseinrichtung 42 können die Spannelemente 36, 38, 40 nacheinander entlang der Konsole 24 in vorgegebene Positionen bewegt werden. Zu diesem Zweck weist die Bewegungseinrichtung 42 eine Mitnahmevorrichtung 44 auf, die in der dargestellten Ausführungsform als Schlitten 46 ausgestaltet ist. Der Schlitten 46 ist innerhalb der Konsole 24 angeordnet und in Längsrichtung der Konsole 24 hin und her verfahrbar.

Zum Verfahren des Schlittens 46 weist die Bewegungseinrichtung 42 ein Antriebsaggregat 48 auf, das in der dargestellten Ausführungsform als Servomotor 50 ausgestaltet ist, der über einen Zahnriemen 52 eine Gewindespindel 54 antreibt. Die Gewindespindel 54 erstreckt sich innerhalb der Konsole 24 über dessen gesamte Länge und wirkt mit einer Spindelmutter 56 zusammen, die am Schlitten 46 festgelegt ist. Der Schlitten 46 ist somit über einen Spindelantrieb mit dem Servomotor 50 verbunden und kann innerhalb der Konsole 24 in Längsrichtung hin und her verfahren werden.

Innerhalb der Konsole 26 ist der Schlitten 46 drehfest und in Längsrichtung der Konsole beweglich gehalten. Zu diesem Zweck weist der Schlitten 46 zwei Stirnbacken 58, 60 auf, die starr miteinander verbunden sind. Die Konsole 24 bildet innenseitig ein Führungsprofil aus, in das die Stirnbacken 58, 60 formschlüssig eingreifen. Dadurch wird eine Drehbewegung des Schlittens 46 verhindert, der Schlitten 46 kann aber in Längsrichtung der Konsole 26 verfahren werden.

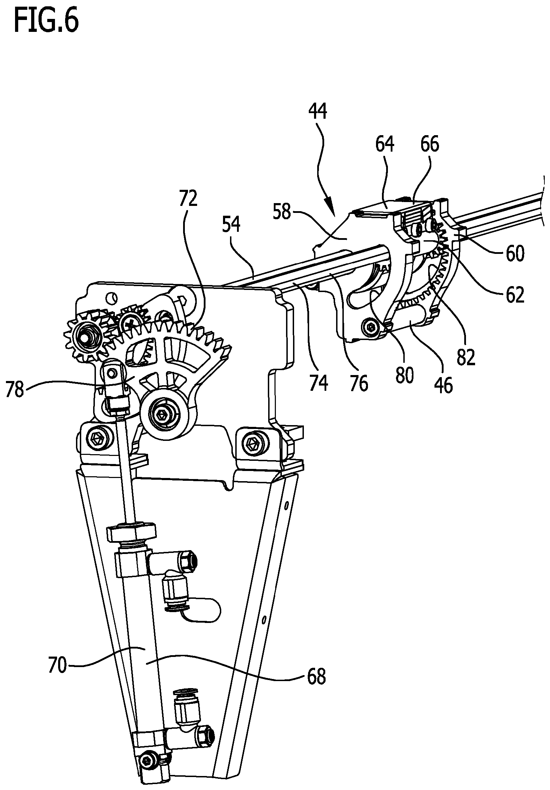

Zwischen den beiden Stirnbacken 58, 60 des Schlittens 46 ist eine Schwenkeinheit 62 um eine in Längsrichtung der Konsole 24 ausgerichtete Schwenkachse verschwenkbar gelagert. An der Schwenkeinheit 62 ist ein erstes Kopplungsglied 64 gehalten, das als erster Permanentmagnet 66 ausgebildet ist und durch Verschwenken der Schwenkeinheit 62 um etwa 90° zwischen einer in den Figuren 4, 5, 8 und 10 dargestellten Entkopplungsstellung und einer in den Figuren 6, 9 und 11 dargestellten Kopplungsstellung hin und her geschwenkt werden kann.

Zum Verschwenken der Schwenkeinheit 62 weist die Bewegungseinrichtung 42 ein Schwenkaggregat 68 auf, das in der dargestellten Ausführungsform als pneumatisches Kolben-Zylinderaggregat 70 ausgestaltet und über eine Schwenkmechanik 72 mit der Schwenkeinheit 62 gekoppelt ist.

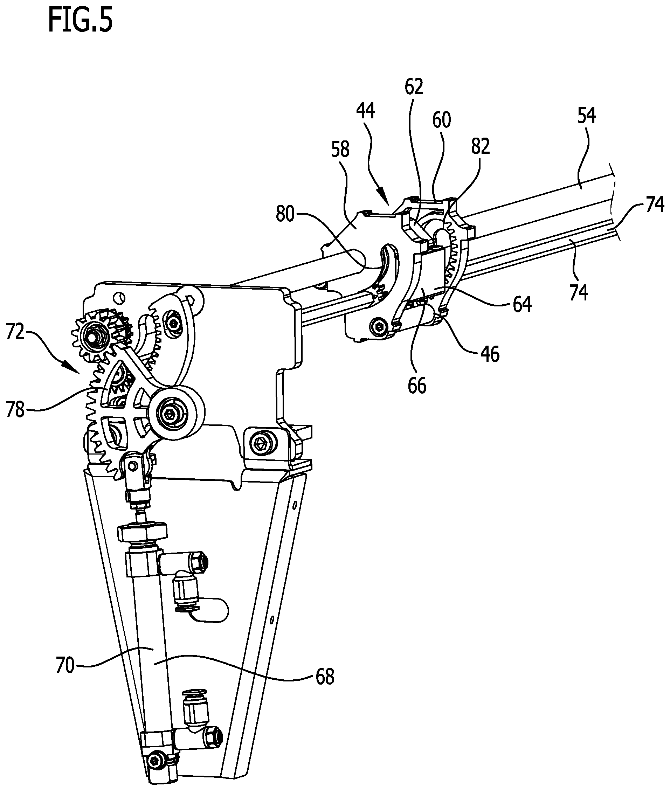

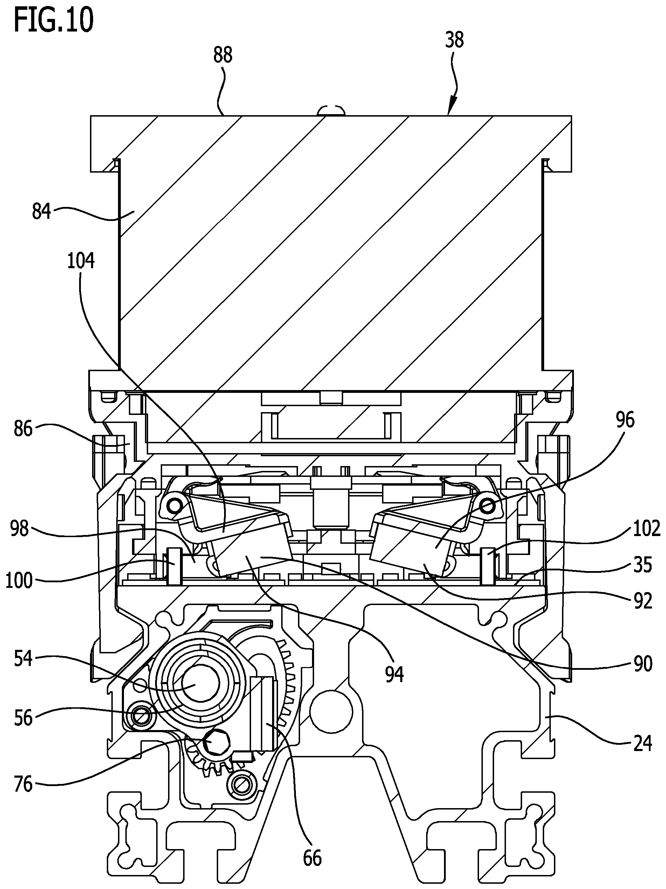

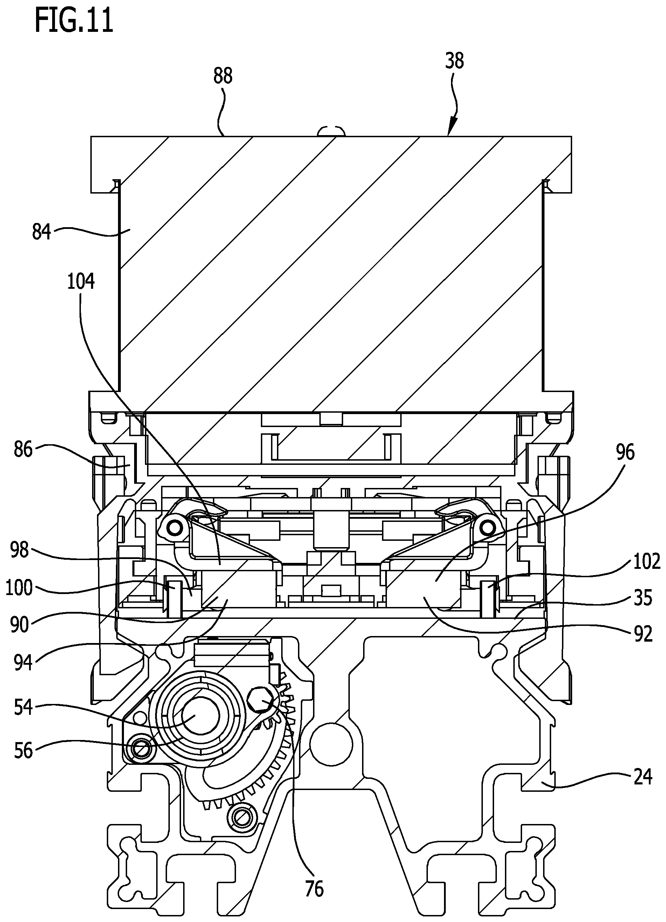

Die Schwenkmechanik 72 weist ein parallel zur Gewindespindel 54 ausgerichtetes Schwenkorgan 74 auf, das in Form einer Schwenkstange 76 ausgebildet ist, die über Getriebeelemente 78 mit dem Kolben-Zylinderaggregat 70 gekoppelt ist. Die Schwenkstange 76 erstreckt sich innerhalb der Konsole 24 über deren gesamte Länge und durchgreift mit Spiel bogenförmige Durchbrechungen 80, 82 der Stirnbacken 58, 60 und ist an der Schwenkeinheit 62 axial verschieblich gehalten. Dies ermöglicht es, die Schwenkeinheit 62 unabhängig vom Schlitten 46 mittels der Schwenkstange 76 und des Kolben-Zylinderaggregats 70 zu verschwenken, sodass der erste Permanentmagnet 66 wahlweise seine Entkopplungsstellung oder seine Kopplungsstellung einnehmen kann. In den Figuren 4 und 5 nimmt das Kolben-Zylinderaggregat 70 eine eingefahrene Stellung ein, die der Entkopplungsstellung des ersten Permanentmagneten 66 entspricht, und in Figur 6 nimmt das Kolben-Zylinderaggregat 70 eine ausgefahrene Stellung ein, die der Kopplungsstellung des ersten Permanentmagneten 66 entspricht. In der Kopplungsstellung befindet sich der erste Permanentmagnet 66 an der Oberseite des Schlittens 46 und ist somit in einem geringen Abstand zur Oberseite 35 der Konsole 24 angeordnet. Dies wird insbesondere aus Figur 11 deutlich. In der Entkopplungsstellung ist der erste Permanentmagnet 66 um etwa 90° verschwenkt, sodass er einen erheblichen Abstand zur Oberseite 35 der Konsole 24 einnimmt. Dies wird insbesondere aus Figur 10 deutlich.

Die Spannelemente 36, 38, 40 sind identisch ausgestaltet. Sie weisen jeweils einen Spannkopf 84 auf, der auf einem Spannsockel 86 aufsitzt. Der Spannkopf 84 bildet oberseitig eine Auflagefläche 88 für das aufzuspannende Werkstück aus. In die Auflagefläche 88 münden an sich bekannte und deshalb in der Zeichnung zur Erzielung einer besseren Übersicht nicht dargestellte Unterdruckleitungen, die mit einer in der Zeichnung aus Gründen einer besseren Übersicht ebenfalls nicht dargestellten zentralen Unterdruckquelle verbunden sind. Dies erlaubt es, das aufzuspannende Werkstück in bekannter Weise mit einer Spannkraft zu beaufschlagen.

Der Spannsockel 86 weist zwei zweite Kopplungsglieder 90, 92 auf, die jeweils als zweiter Permanentmagnet 94, 96 ausgestaltet sind und mit dem am Schlitten 46 angeordneten ersten Kopplungsglied 64 magnetisch und berührungslos zusammenwirken, wenn der Schlitten 46 eine Position unmittelbar unterhalb eines Spannelements 36, 38, 40 einnimmt und das erste Kopplungsglied 64 seine Kopplungsstellung einnimmt, wie dies in Figur 11 beispielhaft am Spannelement 38 dargestellt ist. In dieser Stellung kann das oberhalb des Schlittens 46 angeordnete Spannelement 36, 38 oder 40 mittels des Schlittens 46 in Längsrichtung der Konsole 24 in eine gewünschte Position verfahren werden. Zur Ermittlung der Position des Schlittens 46 weist der Servomotor 50 einen Drehgeber auf, der der Steuereinrichtung 18 ein Signal bereitstellt, mit dessen Hilfe die aktuelle Position des Schlittens 46 bestimmt und mit einer Zielposition für das jeweilige Spannelement 36, 38, 40 verglichen werden kann. Hat das Spannelement 36, 38, 40 seine Zielposition erreicht, so kann der erste Permanentmagnet 66 mittels des Kolben-Zylinderaggregats 70 in seine Entkopplungsstellung verschwenkt werden, sodass das jeweilige Spannelement 36, 38, 40 vom Schlitten 46 nicht länger bewegt werden kann und folglich der Schlitten 46 unabhängig vom Spannelement innerhalb der Konsole verfahren werden kann.

Um während der Bewegung der Spannelemente 36, 38, 40 an der Oberseite 35 der Konsole 24 auftretende Reibungskräfte zu verringern, weisen die Spannelemente 36, 38, 40 jeweils ein Fahrwerk 98 auf, das im Spannsockel 86 angeordnet ist und an dem mehrere Stützelemente, im dargestellten Ausführungsbeispiel Laufrollen 100, 102, drehbar gelagert sind. Das Fahrwerk 98 ist über eine Hebelmechanik 104 mit den zweiten Permanentmagneten 94, 96 mechanisch verbunden. Nimmt der Schlitten 46 eine Stellung unmittelbar unterhalb eines Spannelements 36, 38, 40 ein und nimmt der erste Permanentmagnet 66 seine Kopplungsstellung ein, so werden die zweiten Permanentmagnete 94, 96 in Richtung auf den ersten Permanentmagneten 66 bewegt und dadurch wird das Fahrwerk 98 aus einer in Figur 10 dargestellten Ruhestellung in Richtung auf die Oberseite 35 der Konsole 24 in eine in Figur 11 dargestellte Arbeitsstellung bewegt, in der sich das jeweilige Spannelement 36, 38, 40 lediglich über die Laufrollen 100, 102 an der Oberseite 35 der Konsole 24 abstützt. Bei einer Bewegung des jeweiligen Spannelements 336, 38, 40 entlang der Konsole 24 können sich dann die Laufrollen 100, 102 an der Oberseite 35 der Konsole 24 abrollen, sodass der Reibungswiderstand sehr geringgehalten werden kann.

Mithilfe des Schlittens 46, der über die Gewindespindel 54 vom Servomotor 50 angetrieben wird, können die Spannelemente 36, 38, 40 nacheinander entlang der Oberseite 35 der Konsole 24 verfahren werden, sofern der erste Permanentmagnet 66 seine Kopplungsstellung einnimmt und der Schlitten 46 unmittelbar unterhalb eines Spannelements 36, 38, 40 positioniert ist. Der Schlitten 46 ist hierbei zusammen mit der Schwenkeinheit 62 und der Gewindespindel 54 innerhalb der Konsole 24 angeordnet und somit vor Beeinträchtigungen durch Schmutzpartikel geschützt.

Die Werkstückaufspannvorrichtung 16 erlaubt es somit einem Bediener, die Spannelemente 36, 38, 40 reibungsarm entlang der Konsole 24 zu verfahren, wobei die Gefahr einer Beeinträchtigung durch Schmutzpartikel geringgehalten werden kann und die Werkstückaufspannvorrichtung 16 einen verhältnismäßig geringen Herstellungsaufwand erfordert.

## Patentansprüche

1. Werkstückaufspannvorrichtung zum Aufspannen von zu bearbeitenden Werkstücken für eine Holzbearbeitungsmaschine, mit mindestens zwei Führungsschienen (20, 22) und mehreren Konsolen (24, 26, 28, 30, 32, 34), die entlang der Führungsschienen (20, 22) bewegbar sind und auf deren Oberseite (35) mehrere Spannelemente (36, 38, 40) aufsetzbar sind, die jeweils ein Auflager für das aufzuspannende Werkstück aufweisen, wobei zumindest einer Konsole (24, 26, 28, 30, 32, 34) eine Bewegungseinrichtung (42) zugeordnet ist mit einer innerhalb der Konsole (24, 26, 28, 30, 32, 34) angeordneten und in Längsrichtung der Konsole (24, 26, 28, 30, 32, 34) verfahrbaren Mitnahmevorrichtung (44) zum Bewegen der auf die Konsole (24, 26, 28, 30, 32, 34) aufgesetzten Spannelemente (36, 38, 40) entlang der Konsole (24, 26, 28, 30, 32, 34), wobei die Mitnahmevorrichtung (44) zum Bewegen eines aufgesetzten Spannelements (36, 38, 40) mit diesem koppelbar und nach erfolgter Bewegung des Spannelements (36, 38, 40) von diesem entkoppelbar ist, **dadurch gekennzeichnet, dass** die Mitnahmevorrichtung (44) mit dem jeweils zu bewegenden Spannelement (36, 38, 40) berührungslos koppelbar ist.

2. Werkstückaufspannvorrichtung nach Anspruch 1, **dadurch gekennzeichnet, dass** die Mitnahmevorrichtung (44) mit dem jeweils zu bewegenden Spannelement (36, 38, 40) magnetisch koppelbar ist, wobei die Mitnahmevorrichtung (44) und die Spannelemente (36, 38, 40) jeweils mindestens ein magnetisches oder magnetisierbares Kopplungsglied (66, 94, 96) aufweisen.

3. Werkstückaufspannvorrichtung nach Anspruch 1, **dadurch gekennzeichnet, dass** das mindestens eine Kopplungsglied (64) der Mitnahmevorrichtung (44) und/oder das mindestens eine Kopplungsglied (90, 92) der Spannelemente (36, 38, 40) als Permanentmagnet (66, 94, 96) ausgestaltet ist.

4. Werkstückaufspannvorrichtung nach Anspruch 2 oder 3, **dadurch gekennzeichnet, dass** das mindestens eine Kopplungsglied (64) der Mitnahmevorrichtung (44) zwischen einer Kopplungsstellung und einer Entkopplungsstellung hin und her bewegbar ist.

5. Werkstückaufspannvorrichtung nach Anspruch 4, **dadurch gekennzeichnet, dass** die Mitnahmevorrichtung (44) einen innerhalb der Konsole (24, 26, 28, 30, 32, 34) in deren Längsrichtung verfahrbaren Schlitten (46) aufweist, der mit einem Antriebsaggregat (48) verbunden ist und an dem das mindestens eine Kopplungsglied (64) der Mitnahmevorrichtung (44) zwischen der Kopplungsstellung und der Entkopplungsstellung hin und her bewegbar gehalten ist.

6. Werkstückaufspannvorrichtung nach Anspruch 5, **dadurch gekennzeichnet, dass** der Schlitten (46) über einen Linearantrieb, insbesondere einen Spindelantrieb, mit dem Antriebsaggregat (48) verbunden ist.

7. Werkstückaufspannvorrichtung nach Anspruch 5 oder 6, **dadurch gekennzeichnet, dass** das Antriebsaggregat (48) als Elektromotor, insbesondere als Servomotor (50) ausgestaltet ist.

8. Werkstückaufspannvorrichtung nach Anspruch 5, 6 oder 7, **dadurch gekennzeichnet, dass** das Antriebsaggregat (48) an einer Stirnseite der Konsole (24, 26, 28, 30, 32, 34) angeordnet ist.

9. Werkstückaufspannvorrichtung nach einem der Ansprüche 5 bis 8, **dadurch gekennzeichnet, dass** der Schlitten (46) in der Konsole (24, 26, 28, 30, 32, 34) drehfest und in Längsrichtung der Konsole (24, 26, 28, 30, 32, 34) beweglich gehalten ist.

10. Werkstückaufspannvorrichtung nach einem der Ansprüche 5 bis 9, **dadurch gekennzeichnet, dass** die Mitnahmevorrichtung (44) eine Schwenkeinheit (62) aufweist, die am Schlitten (46) um eine in Längsrichtung der Konsole (24, 26, 28, 30, 32, 34) ausgerichtete Schwenkachse verschwenkbar gelagert ist und an der das mindestens eine Kopplungsglied (64) der Mitnahmevorrichtung (44) festgelegt ist.

11. Werkstückaufspannvorrichtung nach Anspruch 10, **dadurch gekennzeichnet, dass** die Schwenkeinheit (62) über eine Schwenkmechanik (82) mit einem Schwenkaggregat (68) verbunden ist.

12. Werkstückaufspannvorrichtung nach Anspruch 11, **dadurch gekennzeichnet, dass** das Schwenkaggregat (68) als Elektromotor oder als hydraulisches oder pneumatisches Kolben-Zylinderaggregat ausgestaltet ist.

13. Werkstückaufspannvorrichtung nach Anspruch 11 oder 12, **dadurch gekennzeichnet, dass** das Schwenkaggregat (68) an einer Stirnseite der Konsole (24, 26, 28, 30, 32, 34) angeordnet ist.

14. Werkstückaufspannvorrichtung nach einem der voranstehenden Ansprüche, **dadurch gekennzeichnet, dass** die Spannelemente (36, 38, 40) jeweils ein Fahrwerk (98) aufweisen, an dem mehrere Stützelemente (100, 102) drehbar gelagert sind, wobei das Fahrwerk (98) mittels der Mitnahmevorrichtung (44) aus einer Ruhestellung in Richtung auf die Oberseite (35) der Konsole (24, 26, 28, 30, 32, 34) bewegbar ist.

15. Holzbearbeitungsmaschine zum Bearbeiten von plattenförmigen Werkstücken aus Holz und Holzersatzstoffen, umfassend ein Maschinengestell (12) und eine entlang des Maschinengestells (12) hin und her verfahrbare Bearbeitungsvorrichtung (14) zum Bearbeiten der Werkstücke, und weiter umfassend eine Steuereinrichtung (18) sowie eine Werkstückaufspannvorrichtung (16) nach einem der voranstehenden Ansprüche, wobei die Führungsschienen (20, 22) der Werkstückaufspannvorrichtung (16) am Maschinengestell (12) festgelegt sind.
